# EUROPEAN PATENT SPECIFICATION

(11) **EP 4 472 758 B1**
(45) Date of publication and mention of the grant of the patent: **04.11.2026**
(21) Application number: 23702147.2
(22) Date of filing: 31.01.2023
(51) Int. Cl.: B01D 67/00, B01D 69/06, B01D 69/10, B01D 63/02, B01D 65/00, D04B 21/00

(54) **INTEGRATED PERMEATE CHANNEL MEMBRANE STRUCTURE**
MEMBRANSTRUKTUR MIT INTEGRIERTEM PERMEATKANAL
STRUCTURE DE MEMBRANE DE CANAL DE PERMÉAT INTÉGRÉE

(30) Priority: 31.01.2022 EP 22154282
(43) Date of publication of application: 11.12.2024
(73) Proprietor: Blue Foot Membranes NV, 3920 Lommel (BE)
(72) Inventor: AERTS, Peter, 3920 Lommel (BE); BRÜSS, Ulrich, 3920 Lommel (BE); VAN HOOF, Stephan, 3920 Lommel (BE)
(74) Representative: Brantsandpatents bv
(86) International application number: PCT/EP2023/052270
(87) International publication number: WO 2023/144409

(56) References cited:
- EP-A1- 1 625 885
- WO-A1-2012/098130
- WO-A1-2021/110716
- US-B2- 8 586 266
- DOYEN W ET AL: "Spacer fabric supported flat-sheet membranes: A new era of flat-sheet membrane technology", DESALINATION, ELSEVIER, AMSTERDAM, NL, vol. 250, no. 3, 30 January 2010 (2010-01-30), pages 1078 - 1082, XP026788787, ISSN: 0011-9164, [retrieved on 20091014], DOI: 10.1016/J.DESAL.2009.09.112

## Description

### FIELD OF THE INVENTION

The present invention relates to a filtration membrane envelope to be used in water treatment, more particularly water filtration and wastewater purification.

### BACKGROUND

Integrated permeate channel (IPC) membranes have been used during the last years in membrane bioreactors for wastewater purification. IPC membranes consisting of 3D woven textiles have been described in EP1807184.

A problem with the currently known solutions in the market is however that the multiple layers tend to delaminate when in use in filtration and backwash mode, which obviously has a negative impact on the lifespan of the membranes. In addition, the currently known membranes that are cast on a woven or knitted textile substrate, are susceptible to compression.

There remains a need in the art for a filtration membrane envelope with improved mechanical properties that maintain their stiffness, do not delaminate and have a good compression resistance, during assembly and end-use applications both in filtration and backwash mode.

An IPC membrane with a spacer fabric embedded in the membrane layers is also disclosed by Doyen et al., 2009 (Desalination, vol 250, no 3), EP1625885 and WO2021110716. WO2012098130 also relates to an IPC membrane. The mechanical properties of a membrane are improved by optimizing the layers of said membrane. None of the above documents relates to optimized membrane layers of specific thickness.

The present invention aims to resolve at least some of the problems and disadvantages mentioned above. The aim of the invention is to provide a filtration membrane envelope with fine-tuned specifications of thicknesses that eliminates those disadvantages.

### SUMMARY OF THE INVENTION

The present invention and embodiments thereof serve to provide a solution to one or more of the above-mentioned disadvantages. To this end, the present invention relates to a filtration membrane envelope according to claim 1.

More specifically, the current invention provides a filtration membrane envelope comprising a 3D spacer fabric having an upper and lower surface tied together and spaced apart by monofilament threads, said 3D spacer fabric is interposed between two membrane layers, and forming a permeate channel, wherein said membrane layers are cast respectively on said upper and lower fabric surface of said 3D spacer fabric and wherein said upper and lower fabric surfaces are embedded in said membrane layers, thereby forming an upper and lower anchorage section, wherein said anchorage section has a thickness of between 300 and 600 micron.

It was found that the latter anchorage section allows for a good anchorage of the different components of the membrane envelope, to such an extent that delamination or peeling, when subjected to high pressures, is prevented. Overall, the envelope is able to retain its mechanical features, even after extensive use. Preferred embodiments of the membrane envelope are shown in any of the claims 2 to 5.

In a second aspect, the present invention relates to a water filtration module according to claim 6. More particular, the water filtration module described herein comprises an array of planar membrane envelopes.

In a third aspect, the present invention relates to a use according to claim 7.

### Description of figures

**Figure 1** shows a top view (**Figure 1A**) and a side view (**Figure 1B**) of a module according to an embodiment of the current invention. **Figure 1C** shows a detail of a membrane envelope according to the current invention, comprised of a permeate channel interposed between two membrane layers.
**Figure 2A** shows a schematic view of a cross-section of a filtration membrane envelope according to an embodiment of the current invention **Figure 2B** is a scanning electron microscope (SEM) view of the cross-section of an actual membrane.
**Figure 2C** is a scanning electron microscope (SEM) view of the cross-section of a 3D spacer fabric used for manufacturing of a 3D membrane envelope according to an embodiment the invention.
**Figure 3** shows a setup for determining a membrane envelope's peeling or delamination peeling or delamination.

### DETAILED DESCRIPTION OF THE INVENTION

The present invention concerns a filtration membrane envelope for waste-water purification. Furthermore, the present invention relates to a filtration module comprising an array of planar membrane envelopes and to a method of use of said filtration membrane envelope or filtration module.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specify the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, *e.g*., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention and form different embodiments, as would be understood by those in the art. For example, in the following claims, any of the claimed embodiments can be used in any combination.

"Anchorage section" as used herein is defined as a portion of the polymeric cast membrane where the fabric is embedded in.

"Filtration layer" as used herein is defined as the portion of the membrane layer cast onto said fabric that did not emerge into said fabric, but instead is present on top of the anchorage section. Usually, the filtration layer is defined by a specific porosity in the top layer formed by the precipitated polymer, typically with a pore size of between 10 nm and 1 micron. Consequently, said filtration layer may allow filtering of water.

In a first aspect, the invention relates to a filtration membrane envelope comprising a 3D spacer fabric having an upper and lower surface tied together and spaced apart by monofilament threads, said 3D spacer fabric is interposed between two membrane layers and forming a permeate channel, wherein said membrane layers are cast respectively on said upper and lower fabric surface of said 3D spacer fabric and wherein said upper and lower fabric surfaces are embedded in said membrane layers, thereby forming an upper and lower anchorage section.

In another embodiment, the total thickness of said anchorage section is between 300 and 600 micron, between 350 and 600 micron, between 400 and 600 micron, between 450 and 600 micron, between 500 and 600 micron, preferably between 550 and 600 micro.

It will be clear to a skilled person that the thickness of the anchoring section can be measured by many methods known in the art, like scanning electron microscopy. In an embodiment, said thickness is a mean value, determined by measuring the thickness of said anchorage section at a multitude of points of the envelope. The absolute thickness at such distinct points is defined by the distance between an extreme filament, loop or thread of the fabric and a termination point of the polymer embedded in said fabric, wherein after said termination point, the fabric is free of polymer.

The anchorage section is defined as the section of the 3D spacer fabric that is embedded in either the upper or lower membrane layer. It was observed that a membrane envelope having an anchorage section should have a minimal thickness in order to make the membrane envelopes sufficiently sturdy to withstand high pressures exercised during operation activity and backflushing. No peeling or delamination, in this case, is observed. Moreover, the inventors observed that the membrane envelopes of the invention do not swell or expand their length or thickness when operated under submerged conditions.

By preference, the filtration layers extend from each anchorage section in a direction facing the outer side of said envelope. The minimal thickness of the filtration layer is between 400 and 500 micron. In an embodiment, the thickness of the filtration layer is the same on the lower and upper surfaces of the 3D spacer fabric. In a preferred embodiment, said thickness of the filtration layer may vary. For instance, the upper surface may have a thicker filtration layer than the lower surface of the 3D spacer fabric. Alternatively, the lower surface may have a thicker filtration layer than the upper surface of the 3D spacer fabric.

In an embodiment, each membrane layer has a minimal total thickness of 700, 750, 800, 850, 900, 950, 1000, 1050, 1100, 1150, 1200, 1250, 1300, 1350 or 1400 micron. In another or further embodiment, each membrane layer will have a total thickness of between 700 and 1400 micron, between 750 and 1400 micron, between 800 and 1400 micron, between 850 and 1400 micron, between 900 and 1400 micron, between 100 and 1400 micron, between 1100 and 1400 micron, between 1200 and 1400 micron, or between 1300 and 1400 micron.

The 3D spacer fabric has lengthwise warp threads and transverse weft threads drawn through and inserted over and under the warp threads. Said warp threads are aligned in a plane and delineate the anchorage sections and the membrane layers. The filtration layer is represented by the zone extending from the plane of the warp threads to the exterior of the filtration membrane envelope, while the zone that included the plane of the warp threads up to the permeate channel was the anchorage section. In another preferred embodiment, the weft threads crossing over the warp threads belong to the anchorage section.

By preference, the total thickness of the filtration membrane envelope is between 1.8 and 6 mm, preferably between 1.8 and 5.5 mm or between 1.8 and 5 mm, preferably between 1.8 and 4.5 mm, preferably between 1.8 and 4 mm, preferably between 1.8 and 3.5 mm, preferably between 1.8 and 3 mm, preferably between 1.8 and 2.5 mm, preferably between 1.8 and 2 mm.

In an embodiment, the total thickness of the total filtration membrane envelope is between 1.9 and 6 mm, between 2 and 6 mm, between 2.5 and 6 mm, between 3 and 6 mm, between 3.5 and 6 mm, between 4 and 6 mm, between 4.5 and 6 mm, between 5 and 6 mm, between 5.5 and 6 mm.

The above-defined thickness of the anchorage section and thickness of the membrane and filtration layers ensure the outstanding properties of the membrane envelopes. Said membrane envelopes are sturdy, highly resistant to compression and flatness and do not expand their length or width when operated under submerged conditions. Moreover, they show less than 10% peeling or delamination of the spacer fabric and membrane layers when subjected to a pressure of 2 bar, preferably they show less than 5% peeling or delamination, preferably less than 1% peeling or delamination or even 0%. The percentage of peeling or delamination is understood as the amount of membrane layer surface that comes off from the 3D spacer fabric.

In an embodiment, the compression of the membrane envelopes is of less than 5% when subjected to a static pressure of 0.5 bar, preferably of 0.1 bar, more preferably of 0.2 bar, more preferably of 0.3 bar, more preferably, of 0.4 bar, more preferably, of 0.5 bar, more preferably of 0.6 bar, more preferably of 0.7 bar, more preferably of 0.8 bar, more preferably of 0.9 bar, more preferably of 1 bar, more preferably of 2 bar.

In an embodiment, the membrane envelopes show less than 5%, preferably less than 4%, more preferably less than 3% when subjected to a static pressure of maximal 0.5 bar.

The 3D spacer fabric present in the filtration membrane envelopes forms a permeate channel. This permeate channel is the free space for liquid extraction in between the two parallel membrane layers of the filtration membrane envelope.

In an embodiment, the permeate channel of said membrane envelope has a channel thickness of between 1 and 4 mm, more preferably between 1.5 and 3 mm, more preferably between 1.8 and 2.8 mm. When the above conditions are present, the pressure drop within the permeate channel is negligible during the operation of the module.

The permeate channel comprises open spaces formed by said 3D spacer fabric. To ensure an optimal flow distribution through the membrane envelopes, the percentage of open spaces in said permeate channel is between 80 and 99%, more preferably between 85 and 99%, more preferably between 90% and 99%.

Preferably, the 3D spacer fabric is of a knitted, woven or non-woven type. In a preferred embodiment, the 3D spacer fabric has a woven structure. In an embodiment, the 3D spacer fabric preferably comprises a material selected from the group consisting of polyester, nylon, polyamide, polyphenylene sulfide, polyethylene and polypropylene. During the weaving process, the lengthwise or longitudinal warp yarns are held stationary in tension on a frame or loom while the transverse weft is drawn through and inserted over and under the warp.

The membrane envelope can be produced by providing a 3D spacer fabric comprising an upper and lower surface fabric spaced apart by monofilament thread at a predefined distance and by subsequently applying a membrane layer to said upper and said lower surface fabric such that a multitude of regions are embedded in said membrane layers. The step of applying the membrane layers preferably comprises a casting step with cast materials and coagulation of said cast material to form a membrane layer in which the fabric is embedded. This process is known as "immersion precipitation" wherein a polymer plus solvent (polymer solution) is cast on a supporting layer and then submerged in a coagulation bath containing nonsolvent. Due to the solvent and nonsolvent exchange, precipitation takes place.

In a preferred embodiment of the membrane as disclosed herein, during said casting step a polymer solution is applied to the upper and lower side of said 3D spacer fabric, forming the upper and lower surfaces of the membrane. More specifically, said polymer is applied by means of an injection process by means of a casting module comprising a casting head. Prior or during the casting process, the variation in thickness and/or tapering of the fabric is measured and the distance between the 3D fabric and the casting head is adjusted based on said measurement.

3D textiles used for filtration membranes fabrication lack uniformity of the surface and are generally variable in thickness and roughness. The outcome of the weaving process is often a tapered textile. It was found that real-time measuring of the variability in the thickness of the 3D spacer fabric and adjustment of the casting head accordingly, results in membranes with uniform cast layers throughout their surface.

By preference, the thickness of the 3D spacer fabric is measured throughout its length before said fabric descends in the casting module. Said measurements are used to adjust the distance between the 3D spacer fabric and the casting head. By adjusting said distance, a uniform cast layer throughout the membrane, which takes into consideration the variation in thickness, and/or tapering of the fabric, is achieved.

In an embodiment, said casting process is done on a fabric that is positioned vertically and which during the casting descents in a precipitation bath. The precipitation bath preferably contains water.

Said casting process can be a one-step process or a multiple step process, wherein a polymer is cast onto the material, and precipitated, after which a second round of casting or coating occurs.

The membrane layer is subjected to densification during the coagulation process. Due to the casting process used, the porosity of the membrane layer will gradually increase in the direction of polymer penetration of the polymer in the 3D fabric. As a result, the membrane layer will comprise of two sections, being a filtration layer with relatively fine or small pore size, and an anchorage section with relatively large pore size. The filtration layer will preferably have pores with a size of between 10 nm and 1 micron, whereas the pore sizes in the anchorage section will have macrovoids.

The cast material may comprise hydrophilic filler materials selected from the group consisting of HPC, CMC, PVP, PVPP, PVA, PVAc, PEO, TiO2, HfO2, Al2O3, ZrO2, Zr3 (PO4)4, Y2O3, SiO2, perovskite oxide materials and SiC; an organic binder material selected from the group consisting of PVC, C-PVC, PSf, PESU, PPS, PU, PVDF, PI, PAN and their grafted variants; and a solvent selected from the group consisting of NMP, DMF, DMSO or DMAC or a mixture thereof. A solvent-free process may be considered as well. It will be clear to a skilled person that also other production methods may be known in the art and applied.

In an embodiment, the thickness of the resulting fabric with cast membrane layers is measured again after said fabric is removed from the bath.

The inventors surprisingly observed that the membrane envelopes wherein the deviations of the spacer fabric are taken into account during the casting process have controlled thickness of the layers, eg anchoring section, filtration layer, permeate channel and ensure optimal mechanical properties of said IPC membrane, like resistance to compression, peeling are sturdy and do not expand their length or width when operated under submerged conditions. The prior art membranes do not possess the outstanding mechanical properties of the membrane of the invention and the thicknesses of the layers and the ratios between said layers is unknown for those prior art membranes. Moreover, the prior art membranes are obtained by other manufacturing methods and thus cannot achieve the properties of the membrane disclosed herein.

By preference, the membrane envelop is planar. The membrane envelope can further comprise a sealant at the perimeter of the planar membrane envelope arranged to prevent direct fluid movement from or to the permeate channel without passing through a membrane layer, and an inlet/outlet port connection(s) in fluid connection with the permeate channel, provided at least one edge on the perimeter. Each membrane envelope can have an end portion covered by a U-shaped cap, wherein, said cap is a metal cap, preferably a stainless steel cap.

In a second aspect, the invention relates to a water filtration module comprising an array of planar membrane envelopes according to any of the embodiments described above.

In a third aspect, the invention relates to the use of a membrane envelope or a filtration module according to the description above, for the purification and/or filtering of a fluid such as water and/or wastewater. The membrane envelope or filtration module can be used for filtration and/or purification of surface water or of wastewater. However, it is obvious that the invention is not limited to this application. The membrane envelope or filtration module according to the invention can be applied in treating all sorts of liquid feed sources.

By preference, the membrane envelope or the water filtration module is used in operation with a backwash transmembrane pressure of at least 300 mbar. Due to the nature of the membrane envelopes, the membrane or module is particularly useful to be cleaned by means of backflushing, back pulsing or backwashing. In an embodiment, said filtration module can be backwashed at a pressure of at least 20 mbar, more preferably at least 30 mbar, more preferably at least 40 mbar, more preferably at least 50 mbar, more preferably at least 60 mbar, more preferably at least 70 mbar, more preferably at least 80 mbar, more preferably at least 90 mbar, more preferably at least 100 mbar, more preferably at least 200 mbar, more preferably at least 300 mbar, more preferably at least 400 mbar, at least 500 mbar, at least 1 bar, at least 2 bar. This high-pressure back pulse is possible without losing the mechanical cleaning efficiency of the backwashing. During this operation, the membranes and more specifically the pores present are cleaned from any debris that was filtered out of the water. This may also include chemically enhanced backwash cleaning, wherein the pores are chemically cleaned by means of a volumetric flow of chemicals over the whole membrane envelope. As for any operation, this again requires an optimal and even flow.

The membrane envelope or the water filtration module as described herein can be used for microfiltration, ultrafiltration, MBRs, pervaporation, membrane distillation, supported liquid membranes and/or pertraction.

It was determined that advantageously, the membrane envelope of the invention does not elongate in length or width when submerged. The structure of the membrane envelope, with the 3D spacer fabric and monofilaments threads embedded in the membrane layers, ensures that when said membrane envelope is submerged in a liquid it maintains its shape and dimension without any expansion. This allows the membrane envelope to stay in place during water filtering operations, without the use of additional means for membrane stabilization e.g. comb-like structures, etc.

The present invention will be now described in more detail, referring to examples that are not limitative.

### DESCRIPTION OF FIGURES

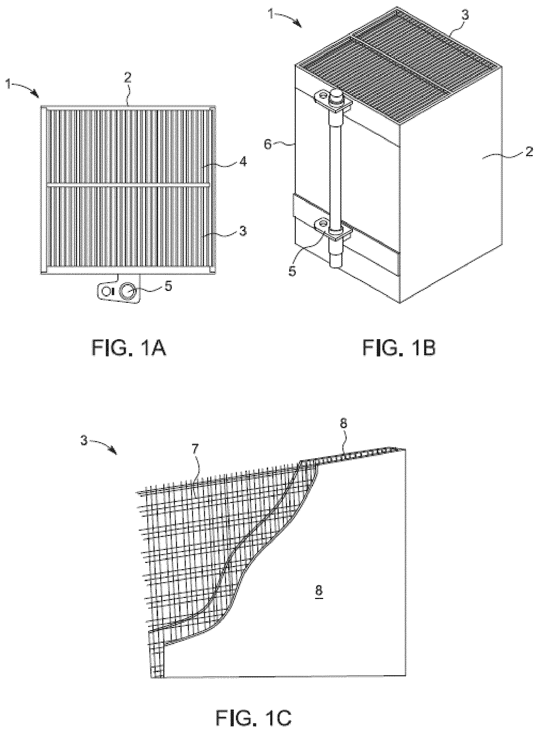

**Figure 1** shows a top view (**Figure 1A**) and a side view (**Figure 1B**) of a module **1** according to an embodiment of the current invention. The module **1** comprises a rectangular rigid holder **2** equipped with several planar membrane envelopes **3** in the holder **2,** and placed side by side and spaced apart. Caps **4** may be provided on the top and bottom part of the membrane envelopes **3** to ensure membrane rigidity and positioning. As an example, the module may comprise between 65 to 107 membrane envelopes. The module 1 is provided with manifolds **5, 6** regulating the water in- and outlet. The envelopes are comprised of a 3D spacer fabric forming a permeate channel. The 3D spacer fabric is lined by membrane layers **8, 17** that cover the 3D spacer fabric at both sides. A schematic drawing of a section of an envelope **3** is shown in **Figure 1C****.** The permeate channel formed by the 3D spacer fabric **7** has between 80 and 99% of open space, that are formed by the nature of the 3D spacer fabric. Advantageously, the thickness of the spacer fabric part of the membrane envelopes is between 1.5 and 3 mm.

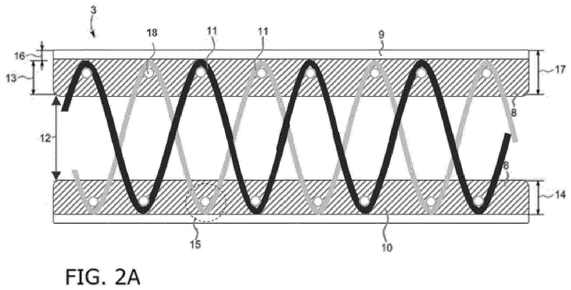

**Figures 2A** show a schematic view of cross-sections of a filtration membrane envelope according to an embodiment of the current invention. The membrane envelope **3** is obtained by casting the upper **9** and lower **10** surfaces of a 3D spacer fabric 7 with membrane layers **8, 17.** Between the parallel two membrane layers of the filtration membrane envelope, a permeate channel **12** is formed, for liquid extraction. The 3D spacer fabric is made by monofilament threads **11, 18** such as, weft threads **11** and warp threads **18.** The 3D spacer fabric is embedded in a multitude of regions **15** in the membrane layers, forming an upper anchorage section **13** on the upper surface of the 3D spacer fabric and a lower anchorage section **14** on the lower surface of the 3D spacer fabric. Filtration layers **16** extend from each anchorage section in a direction facing the outer side of said filtration membrane envelope.

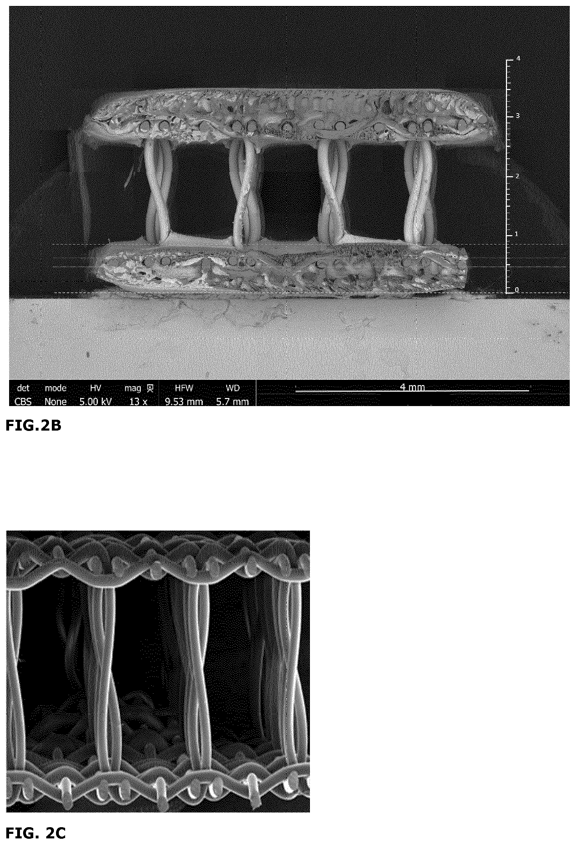

**Figure 2B** is a scanning electron microscope (SEM) view of the cross-section of an actual membrane. The plane of weft threads delineates the anchorage section and the filtration layer. The scale bar represents 4 mm.
**Figure 2C** is a scanning electron microscope (SEM) view of the cross-section of a 3D spacer fabric used for manufacturing of a 3D membrane envelope according to the invention.

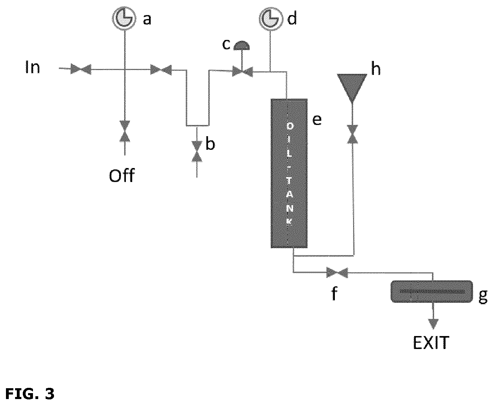

**Figure 3** Setup for determination of the membrane envelope peeling or delamination. **In** is the air valve, **a** is a manometer, **b** is a draining valve, **c** is an air pressure regulator, **d** is a pressure gauge, **e** is the oil vessel, **f** is a clave, **g** is a membrane test cell and **off** is depressurizing valve.

### Example

The present invention will now be further exemplified with reference to the following example. The present invention is in no way limited to the given example or to the embodiments presented in the figures.

### Example 1: Resistance to pressure of the filtration membrane envelopes

Filtration membrane envelopes are subjected to an air pressure of 2 bar, from the inside out, mimicking a backwashing mode. Three types of filtration membrane envelopes are used, with different membrane layers. The set-up is as follows:
- Membrane 1 has a membrane layer of less than 150 micron thick (thin membrane layer) and an anchorage section of less than 100 micron thick,
- Membrane 2 has a membrane layer of more than 1400 micron thick (thick membrane layer) and an anchorage section of more than 600 micron thick,
- Membrane 3 is a membrane according to the current invention, having a membrane layer of between 150 and 1400 micron thick (invention membrane layer) and an anchorage section of between 100 and 600 micron thick.

The delamination or peeling of the spacer fabric and membrane layers at 2 bar air pressure was determined.

Results: The delamination or peeling percentage is inversely proportional to the thickness of the membrane layer. Membranes 2 and 3, with thick membrane layer and membrane layer according to the invention, do not delaminate while membrane 1, with thin membrane layer, delaminates. Although delamination or peeling is prevented in membrane 2, such a thick membrane layer, over 1400 micron, is not cost-effective, in contrast to the membrane of the invention that assures a sturdy anchorage section and a sufficient membrane layer to prevent delamination or peeling being economical at the same time.

### Example 2: Compression test of the filtration membrane envelopes

Specimens for fabrication of filtration membranes are subjected to constant static pressures ranging between 0 and 2 bar (such as 0.5 or 1 bar) mimicking suction mode filtration. The set-up is as follows:
- A filtration membrane envelope according to the invention, with a membrane layer of between 150 and 1400 micron thick (invention membrane layer) and an anchorage section of between 100 and 600 micron thick,
- A 3D woven textile used for making a filtration membrane envelope according to the invention,
- A prior art filtration membrane,
- A prior art knitted fabric used for making a filtration membrane.

The percentage of compression of the specimens is determined.

Results: The filtration membrane envelope and the 3D woven textile used for making it show significantly less compression than the prior art membrane and prior art knitted fabric.

### Example 3: Determination of the thicknesses of the layers of filtration membrane envelopes

Scanning Electron Microscopy (SEM) was used for determining the thickness of the filtration membrane's envelope layers. Membrane samples were cut into pieces of 6x20 mm and coated in a conductive platinum (Pt) layer to avoid charging on the top and on the side of the sample.

Electron micrographs were recorded with the FEI Quanta FEG microscope using secondary (SE) and/or backscatter electrons (BSE). By using SE-electrons primarily the surface structure is displayed whereas using BSE-electrons the recording primarily shows the difference in (electron) density of the different materials. This implies that areas with a higher density and/or a larger concentration of heavier elements appear brightest and areas with lower density material are displayed darker.

The samples were arranged with the side view upwards. 4 pictures were taken from 4 different samples at a magnification of 13X.

On the SEM micrographs, the cut-through of the warp threads were visible in sections as round objects sticking out of the membrane structure and arranged in one plane by design (Fig. 2B). The diameter of the warp threads was 150 µm. The plane of the warp threads delineated the anchorage section and the filtration layer. The filtration layer was the zone extending from the plane of the warp threads to the exterior of the filtration membrane envelope, while the zone that included the plane of the warp threads up to the permeate channel was the anchorage section.

The thickness of each layer was measured based on the magnification used (Fig. 2B), one time for each micrograph, and the average of the 4 samples was determined.

### Example 4: Determination of the percentage of open spaces in the permeate channel

The porosity of the permeate channel was assessed by determining the percentage of open spaces per 1 cm³ of permeate channel.

The membrane envelope was cut through the center and was placed with the filtration layer down and with the cut monofilament threads sticking upwards.

A frame of 1x1 cm was placed over the sample and examined under a stereo microscope (Zeiss Stemi 2000-C). The number of monofilament threads sticking out was then determined. The volume that the monofilament threads occupy was determined based on their number and diameter (150um) and subtracted from the total volume of the permeate channel. The percentage of open spaces was then calculated based on the difference.

For a membrane envelope with a permeate channel thickness of 2 mm and where 168 threads were counted in 1 cm², the following was computed:
a) volume of one monofilament thread= 3.14 x (0.0075 cm)² x 0,2 cm = 0.0000353 cm³
b) Total volume of monofilament threads = 168 x 0.0000353 = 0.0059 cm³
c) Total volume of the permeate channel = 1cm x 1cm x 0.2 cm = 0.2 cm³
d) Percentage of open spaces= (0.2 cm³ - 0.0059 cm³) / 0.2 cm³ x 100% = 97%

### Example 5: Determination of compression

The compression test was performed using the ISO standard ISO 5084. Said compression was measured at 25°C and 65% relative humidity, using a Twing Albert Frank tensile testing machine type 81828.

Pieces of 3D spacer fabrics were cut into discs 20 mm in diameter.

Each sample of the 3D spacer fabric was subjected to a succession of pressures gradually increasing in strength from 0 to 1.5 bar (Table 1). The pressure was applied for 30 seconds each time. The thickness of the disks was determined before each test and measured again after each compression test.

The average thickness at the end of the compression test was compared with the original thickness and the compression was expressed in percentage using the formula: $Compression \left(%\right) = \frac{{thickness}_{at F = 0} - {thickness}_{at F = x}}{{thickness}_{at F = 0}} \times 100$

Examples of average compression measuring are depicted in table 1. The test was performed on 5 independent samples of the same type of 3D spacer fabric and the mean was computed. For the 3D spacer fabrics analyzed in Table 1, the average compression at 1.5 bar is less than 3%.

**Table 1. Measuring of average compression**

| Pressure applied (bar) | Forced applied (N) | Thickness of the sample (mm) sample no | | | | | average | Average (cumulative) compression (%) |
|---|---|---|---|---|---|---|---|---|
| | | 1 | 2 | 3 | 4 | 5 | | |
| 0.0 | 0.00 | 2.83 | 2.84 | 2.75 | 2.73 | 2.79 | 2.79 | 0.00 |
| 0.1 | 3.14 | 2.83 | 2.8 | 2.75 | 2.72 | 2.81 | 2.78 | 0.36 |
| 0.2 | 6.28 | 2.81 | 2.79 | 2.73 | 2.73 | 2.79 | 2.77 | 0.72 |
| 0.3 | 9.42 | 2.79 | 2.78 | 2.73 | 2.73 | 2.78 | 2.76 | 1.08 |
| 0.5 | 15.7 | 2.79 | 2.72 | 2.72 | 2.72 | 2.77 | 2.74 | 1.79 |
| 0.75 | 23.55 | 2.77 | 2.76 | 2.7 | 2.7 | 2.76 | 2.74 | 1.79 |
| 1 | 31.4 | 2.76 | 2.75 | 2.69 | 2.69 | 2.75 | 2.73 | 2.15 |
| 1.25 | 39.25 | 2.75 | 2.74 | 2.68 | 2.68 | 2.74 | 2.72 | 2.51 |
| 1.5 | 47.1 | 2.75 | 2.73 | 2.68 | 2.68 | 2.73 | 2.71 | 2.87 |

### Example 6: Determination of the membrane envelope peeling or delamination

The peeling or delamination test was carried out in a setup, as depicted in Fig. 3, containing pressurized medium viscous oil (50 cSt) and a membrane module where the membrane was mounted with the filtration layer to the bottom of the membrane test cell.

The workflow of the setup was as follows:
1: the oil vessel was pressurized by introducing air through a valve (in)
2: measuring the supply pressure of air was done with a manometer (a)
3: the pressure in the oil vessel (e) was done by a pressure gauge (d)
4: when opening a calve (f), the pressure was released on a membrane module with a membrane test cell (g).
5: the air pressure was gradually increased from 0 to 4 bar with 0.1 bar/5 sec using a regulator (c)
6: when maximum pressure was achieved, the membrane was pushed or peeled off the support, or ruptures formed into the membrane, releasing all the oil through a valve (exit).
7: the pressure at which the membrane burst was recorded
8: after the test, the system was depressurized via a valve (off); the oil accumulated between the "in" valve and the oil vessel was drained by a valve (b).

### Figure numbers

1: module
2: holder
3: membrane envelope
4: cap
5,6: manifold
7: 3D spacer fabric
8, 17: Membrane layer
9: Upper surface of the 3D spacer fabric
10: Lower surface of the 3D spacer fabric
11: Monofilament weft threads
12: Permeate channel
13: Upper anchorage section
14: Lower anchorage section
15: Monofilament thread embedding region
16: Filtration layer
18: Monofilament warp threads

## Claims

1. A filtration membrane envelope (3) comprising
a 3D spacer fabric (7) having lengthwise monofilament warp threads (18) and transverse monofilament weft threads (11) drawn through and inserted over and under the warp threads and further having an upper and lower surface (9, 10) tied together and spaced apart by weft threads (11),
said 3D spacer fabric being interposed between two membrane layers (8, 17), and forming a permeate channel (12), wherein the permeate channel comprises open spaces formed by said 3D spacer fabric,
wherein said membrane layers are cast respectively on said upper and lower fabric surface of said 3D spacer fabric; and
wherein said upper and lower fabric surfaces are embedded in said membrane layers, thereby forming upper and lower anchorage sections (13, 14), wherein the warp threads (18) are aligned in a plane and delineate the anchorage sections and the membrane layers and wherein filtration layers (16) extend from the plane of the warp threads (18) of the respective anchorage sections (13, 14) in a direction facing the outer side of said filtration membrane envelope to the exterior of the membrane envelope and wherein the thickness of said filtration layers is between 400 and 500 micron as determined by scanning electron microscopy (SEM),
wherein said anchorage sections are zones including the plane of the warp threads up to the permeate channel, and wherein said anchorage sections have a thickness of between 300 and 600 micron as determined by scanning SEM.

2. The filtration membrane envelope according to claim 1, wherein said permeate channel (12) has a channel thickness of between 1.5 and 3 mm.

3. The filtration membrane envelope according to any of the claims 1 or 2, wherein the total thickness of the total membrane envelope is between 1.8 and 6 mm.

4. The filtration membrane envelope according to any of the claims 1 to 3 wherein the percentage of open spaces, as determined by the method disclosed herein, in said permeate channel is between 80 and 99%.

5. The filtration membrane envelope according to any of the claims 1 to 4, wherein the 3D spacer fabric is a woven fabric.

6. A water filtration module comprising an array of planar filtration membrane envelopes according to any of the previous claims 1 to 5.

7. Use of a filtration membrane envelope as in any of the claims 1-5 or of a water filtration module as in claim 6 for water filtration and/or wastewater purification.

## Patentansprüche

1. Filtermembranhülle (3), die eine 3D-Abstandshaltertextilie (7) umfasst, die längsliegende Monofilament-Kettfäden (18) und querliegende Monofilament-Schussfäden (11) aufweist, die über und unter den Kettfäden durchgezogen und eingefügt sind, und ferner eine obere und eine untere Oberfläche (9, 10) aufweist, die aneinander gebunden und durch Schussfäden (11) voneinander beabstandet sind, wobei die 3D-Abstandshaltertextilie zwischen zwei Membranlagen (8, 17) eingeschoben ist und einen Permeatkanal (12) bildet, wobei der Permeatkanal offene Räume umfasst, die durch die 3D-Abstandshaltertextilie gebildet sind, wobei die Membranlagen an die obere beziehungsweise die untere Textilienoberfläche der 3D-Abstandshaltertextilie gegossen sind und wobei die obere und die untere Textilienoberfläche in die Membranlagen eingebettet sind, wodurch obere und untere Verankerungsabschnitte (13, 14) gebildet sind, wobei die Kettfäden (18) in einer Ebene ausgerichtet sind und die Verankerungsabschnitte und die Membranlagen abgrenzen, und wobei sich von der Ebene der Kettfäden (18) der jeweiligen Verankerungsabschnitte (13, 14) Filterlagen (16) in einer Richtung zur Außenseite der Filtermembranhülle weisend zum Äußeren der Membranhülle erstrecken und wobei die Dicke der Filterlagen zwischen 400 und 500 Mikrometern liegt, wie durch Rasterelektronenmikroskopie (REM) bestimmt, wobei die Verankerungsabschnitte Zonen sind, die die Ebene der Kettfäden bis zum Permeatkanal einschließen, und wobei die Verankerungsabschnitte eine Dicke zwischen 300 und 600 Mikrometern aufweisen, wie durch REM bestimmt.

2. Filtermembranhülle nach Anspruch 1, wobei der Permeatkanal (12) eine Kanaldicke zwischen 1,5 und 3 mm aufweist.

3. Filtermembranhülle nach einem der Ansprüche 1 oder 2, wobei die Gesamtdicke der Gesamtmembranhülle zwischen 1,8 und 6 mm beträgt.

4. Filtermembranhülle nach einem der Ansprüche 1 bis 3, wobei der Prozentsatz offener Räume, wie durch das hierin offenbarte Verfahren bestimmt, in dem Permeatkanal zwischen 80 und 99 % beträgt.

5. Filtermembranhülle nach einem der Ansprüche 1 bis 4, wobei die 3D-Abstandshaltertextilie ein Gewebe ist.

6. Wasserfiltermodul, eine Anordnung aus ebenen Filtermembranhüllen nach einem der vorhergehenden Ansprüche 1 bis 5 umfassend.

7. Verwendung einer Filtermembranhülle nach einem der Ansprüche 1 bis 5 oder eines Wasserfiltermoduls nach Anspruch 6 zum Filtern von Wasser und/oder zur Abwasserreinigung.

## Revendications

1. Enveloppe de membrane de filtration (3) comprenant un tissu d'espacement 3D (7) ayant des fils de chaîne monofilaments longitudinaux (18) et des fils de trame monofilaments transversaux (11) tirés à travers les fils de chaîne et insérés sur et sous ceux-ci et ayant en outre une surface supérieure et inférieure (9, 10) liées ensemble et espacées par des fils de trame (11), ledit tissu d'espacement 3D est interposé entre deux couches de membrane (8, 17), et formant un canal de perméat (12), dans laquelle le canal de perméat comprend des espaces ouverts formés par ledit tissu d'espacement 3D, dans laquelle lesdites couches de membrane sont coulées respectivement sur lesdites surfaces de tissu supérieure et inférieure dudit tissu d'espacement 3D et dans laquelle lesdites surfaces de tissu supérieure et inférieure sont noyées dans lesdites couches de membrane, formant ainsi des sections d'ancrage supérieure et inférieure (13, 14), dans laquelle les fils de chaîne (18) sont alignés dans un plan et délimitent les sections d'ancrage et les couches de membrane et dans laquelle des couches de filtration (16) s'étendent depuis le plan des fils de chaîne (18) des sections d'ancrage respectives (13, 14) dans une direction orientée vers le côté extérieur de ladite enveloppe de membrane de filtration vers l'extérieur de l'enveloppe de membrane et dans laquelle l'épaisseur desdites couches de filtration est comprise entre 400 et 500 microns, tel que déterminé par microscopie électronique à balayage (MEB), dans laquelle lesdites sections d'ancrage sont des zones incluant le plan des fils de chaîne jusqu'au canal de perméat, et dans laquelle lesdites sections d'ancrage ont une épaisseur comprise entre 300 et 600 microns, tel que déterminé par MEB.

2. Enveloppe de membrane de filtration selon la revendication 1, dans laquelle ledit canal de perméat (12) a une épaisseur de canal comprise entre 1,5 et 3 mm.

3. Enveloppe de membrane de filtration selon l'une quelconque des revendications 1 ou 2, dans laquelle l'épaisseur totale de l'enveloppe de membrane totale est comprise entre 1,8 et 6 mm.

4. Enveloppe de membrane de filtration selon l'une quelconque des revendications 1 à 3, dans laquelle le pourcentage d'espaces ouverts, tel que déterminé par le procédé décrit ici, dans ledit canal de perméat est compris entre 80 et 99 %.

5. Enveloppe de membrane de filtration selon l'une quelconque des revendications 1 à 4, dans laquelle le tissu d'espacement 3D est un tissu tissé.

6. Module de filtration d'eau comprenant un réseau d'enveloppes de membrane de filtration planes selon l'une quelconque des revendications précédentes 1 à 5.

7. Utilisation d'une enveloppe de membrane de filtration selon l'une quelconque des revendications 1 à 5 ou d'un module de filtration d'eau selon la revendication 6, pour la filtration de l'eau et/ou la purification des eaux usées.
